# EUROPEAN PATENT APPLICATION

(11) **EP 4 563 844 A1**
(43) Date of publication of application: **04.06.2025**
(21) Application number: 22953203.1
(22) Date of filing: 29.07.2022
(51) Int. Cl.: F16H 1/32

(54) **STRAIN WAVE GEAR DEVICE**

(71) Applicant: Harmonic Drive Systems Inc., Shinagawa-ku Tokyo 140-0013 (JP)
(72) Inventor: TAKIZAWA Kenta, Azumino-shi, Nagano 399-8305 (JP)
(74) Representative: TBK
(86) International application number: PCT/JP2022/029395
(87) International publication number: WO 2024/024115

(57) **Abstract**

A strain wave gearing (1) has a hollow input shaft (5). A wave generator (4), which makes an externally toothed gear (3) flex in the radial direction so as to engage an internally toothed gear (2), has a wave bearing (43) that has a ball retainer (47). An input-shaft outer circumferential surface portion of the hollow input shaft (5) that is positioned on the inside of the externally toothed gear (3) is coated with an oil-repellent coating (14). The surface of the ball retainer (47) is also coated with an oil-repellent coating (15). The oil-repellent coatings (14, 15) lower the grease stirring resistance of the hollow input shaft (5) and the ball retainer (47) and make it possible to reduce loss torque at the strain wave gearing (1).

## Description

### TECHNICAL FIELD

The present invention relates to a strain wave gearing equipped with an input shaft.

### BACKGROUND ART

Strain wave gearings are widely used as reducers, and those equipped with an input shaft that transmits high-speed rotation from a motor or the like to a wave generator are known. One of the requirements for strain wave gearings is the reduction of loss torque. When a strain wave gearing operates, loss torque is generated due to the frictional resistance of the meshing parts of the gears, the rolling resistance of the bearings, and the stirring resistance of the grease (lubricant), and part of the energy that rotates the input shaft is converted into heat. Reducing this loss torque has the advantage of making it possible to reduce heat generation and the capacity of the drive motor.

The faster the grease is stirred, the greater the stirring resistance, so the stirring resistance near the input shaft of a strain wave gearing that is used at high speeds of several thousand revolutions per minute accounts for a large proportion of the total loss torque. Also, because a large amount of grease is applied near the input shaft and wave bearing to maintain long-term lubrication, the grease comes into contact not only with the vicinity of balls of the wave bearing, but also with the input shaft, which is one of the reasons for the increased stirring resistance.

Possible ways to reduce stirring resistance are to lower the viscosity of the grease base oil and to reduce the amount applied. However, there is a trade-off between the two and lubricity, and if an existing product is designed with a balance between loss torque and lubricity in mind, further improvements are difficult to make.

In addition, in a strain wave gearing, it has been proposed to form an oil-repellent portion on the surface of the body of the externally toothed gear that is more oil-repellent than the surface of the teeth of the externally toothed gear, with the aim of reducing the outflow of lubricant from the meshing area between the internally toothed gear and the externally toothed gear (Patent Document 1).

### PRIOR ART DOCUMENT

### [Patent Document]

[Patent Document 1] JP 2018-53912 A

### DISCLOSURE OF THE INVENTION

### PROBLEMS TO BE SOLVED BY THE INVENTION

In a strain wave gearing, grease located near the input shaft and near the balls of the wave bearing comes into contact with or adheres to the input shaft, the retainer of the wave bearing, etc. This grease contact increases the stirring resistance and increases the loss torque of the strain wave gearing.

An object of the present invention is to provide a strain wave gearing that can suppress the increase in loss torque caused by increased stirring resistance near the input shaft and near the wave bearing due to the lubricant.

### MEANS USED TO SOLVE THE ABOVE-MENTIONED PROBLEMS

A strain wave gearing of the present invention has:
a rigid internally toothed gear;
a flexible externally toothed gear arranged coaxially inside the internally toothed gear;
a wave generator provided with a wave plug and a wave bearing mounted between a non-circular outer circumferential surface of the wave plug and an inner circumferential surface of the externally toothed gear;
an input shaft attached coaxially to the wave plug;
an input-shaft outer circumferential surface portion that is located inside the externally toothed gear in the input shaft; and
a first oil-repellent coating such as a fluorine resin coating that covers the input-shaft outer circumferential surface portion and has oil-repellent properties against a lubricant applied or supplied to the wave bearing.

Further, in the strain wave gearing of the present invention,
the wave bearing has:
an inner ring and an outer ring;
a plurality of rolling elements inserted in a rollable state into an annular raceway groove formed between the inner ring and the outer ring;
a retainer that holds the rolling elements at positions spaced at regular intervals in a circumferential direction; and
a second oil-repellent coating, such as a fluororesin coating, that covers a surface of the retainer and has oil-repellent properties against the lubricant.

### EFFECT OF THE INVENTION

The strain wave gearing of the present invention has the following effects, which can reduce torque loss in the strain wave gearing.
(1) Reduction in the amount of lubricant to be applied: The oil-repellent coating makes it easier for the lubricant to be shaken off by centrifugal force, and the reduced amount of lubricant to be applied reduces stirring resistance.
(2) Reduction in lubricant shear rate: The oil-repellent coating causes slippage between the lubricant and the surface in contact with the lubricant, lowering the lubricant shear rate and reducing stirring resistance.

### BRIEF DESCRIPTION OF THE DRAWINGS

FIG. 1 is a schematic longitudinal cross-sectional view of a strain wave gearing according to an embodiment of the present invention; and
FIG. 2 is an explanatory view showing grease lubrication potions in the strain wave gearing of FIG. 1.

### MODE FOR CARRYING OUT THE INVENTION

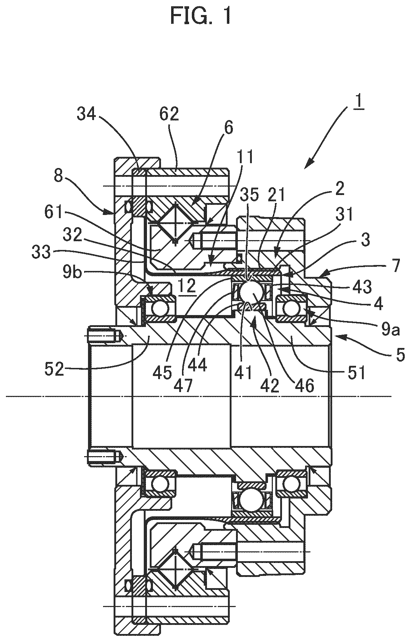

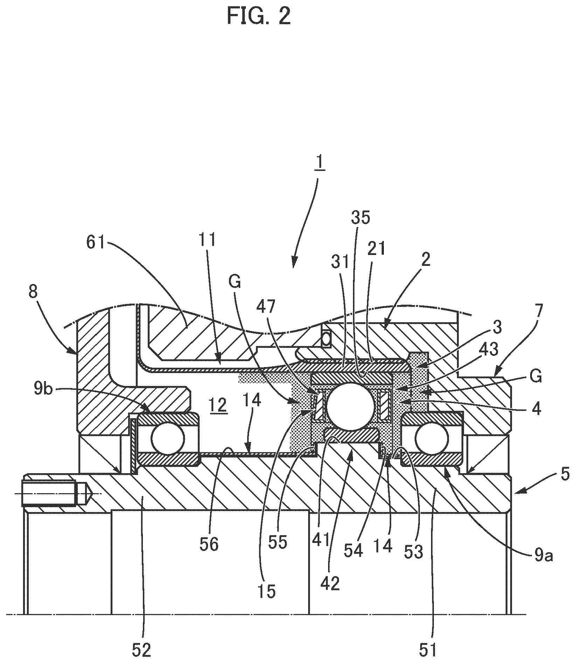

A strain wave gearing according to an embodiment of the present invention will be described with reference to FIGS. 1 and 2. The strain wave gearing 1 has a rigid internally toothed gear 2, a top-hat shaped flexible externally toothed gear 3, a wave generator 4, a hollow input shaft 5, and a main bearing 6 consisting of a cross roller bearing which supports the externally toothed gear 3 in a relatively rotatable state with respect to the internally toothed gear 2. The strain wave gearing 1 also has a fixed end plate 7 which is integrally formed with the internally toothed gear 2, and an output end plate 8 which is an output shaft and is coaxially fastened and fixed to the externally toothed gear 3. One shaft end 51 of the hollow input shaft 5 is supported in a rotatable state by the fixed end plate 7 via a bearing 9a, and the other shaft end 52 of the hollow input shaft 5 is supported in a rotatable state by the output end plate 8 via a bearing 9b.

The internally toothed gear 2 has an annular shape, and internal teeth 21 are formed on its circular inner peripheral surface. The fixed end plate 7 is integrally formed on the end surface of the internally toothed gear 2 on the side of the shaft end 51 in the axial direction. An inner ring 61 of the main bearing 6 is fastened and fixed coaxially to the other axial side of the internally toothed gear 2.

The externally toothed gear 3 has a cylindrical body 32 on which external teeth 31 are formed, a diaphragm 33 that spreads outward in a radial direction from the end of the cylindrical body 32, and an annular boss 34 that is integrally formed on the outer peripheral edge of the diaphragm 33. The cylindrical body 32 is coaxially arranged inside the internally toothed gear 2 and the inner ring 61 of the main bearing 6, and the external teeth 31 face the internal teeth 21 and can mesh therewith. The boss 34 is located between the outer ring 62 of the main bearing 6 and the output end plate 8 in the axial direction. The three members, the outer ring 62, the boss 34 and the output end plate 8, are fastened and fixed coaxially.

The wave generator 4 has a wave plug 42 with an elliptical outer circumferential surface 41 of a constant width that is formed integrally with the outer circumferential surface of the hollow input shaft 5, and a wave bearing 43. The wave bearing 43 is mounted between the elliptical outer circumferential surface 41 of the wave plug 42 and the inner circumferential surface 35 of the cylindrical body 32 where the external teeth 31 of the externally toothed gear 3 are formed. The wave bearing 43 has a flexible inner ring 44, a flexible outer ring 45, a plurality of balls 46 inserted between them in a rollable state, and an annular ball retainer 47 that holds the balls 46 at constant intervals in the circumferential direction.

Inside the strain wave gearing 1, an outer-side gap portion 11 is formed on the outside of the externally toothed gear 3, surrounded by the inner ring 61 of the main bearing 6, the externally toothed gear 3, and the internally toothed gear 2. The outer-side gap portion 11 extends along the outer circumferential surface of the cylindrical body 32 of the externally toothed gear 3, and is connected to the meshing portion between the internal teeth 21 and the external teeth 31. Additionally, an inner-side gap portion 12 is formed on the inside of the externally toothed gear 3, surrounded by the externally toothed gear 3, the hollow input shaft 5, the fixed end plate 7, and the output end plate 8. The wave bearing 43 is located in the inner-side gap portion 12.

A lubricant is applied or supplied to the parts to be lubricated inside the strain wave gearing 1. The main parts to be lubricated are the meshing parts of the internal teeth 21 and external teeth 31, the wave bearing 43 of the wave generator 4, and the sliding parts between the outer ring 45 of the wave bearing 43 and the inner circumferential surface of the externally toothed gear 3. For example, as shown by the shaded area G in FIG. 2, grease is applied or filled inside and around the wave bearing 43 in the inner-side gap portion 12.

As mentioned above, the higher the stirring speed of the grease, the higher the stirring resistance, so the stirring resistance near the hollow input shaft 5, which is used at a high speed of several thousand revolutions per minute, accounts for a large proportion of the total loss torque of the strain wave gearing 1. In addition, a large amount of grease is applied near the hollow input shaft 5 and the wave bearing 43 to maintain long-term lubrication. As a result, the grease comes into contact not only with the vicinity of the balls 46 of the wave bearing 43 but also with the hollow input shaft 5, which is one of the causes of an increase in stirring resistance.

In order to avoid such problems, in the strain wave gearing 1, the input-shaft outer circumferential surface portion that is located inside the externally toothed gear 3 in the hollow input shaft 5 is covered with an oil-repellent coating such as a fluororesin coating that has oil-repellent properties against grease. In this example, as shown in FIG. 2, the input-shaft outer circumferential surface portions 53, 56 on both sides of the wave plug 42 and the end face portions 54, 55 on both sides of the wave plug 42 are covered with an oil-repellent coating 14. In this example, the entire surface of the ball retainer 47 of the wave bearing 43 is also covered with an oil-repellent coating 15 such as a fluororesin coating. The oil-repellent coating 14 and the oil-repellent coating 15 can be the same type of oil-repellent coating. These oil-repellent coatings 14, 15 can also be different types of oil-repellent coatings. Furthermore, these oil-repellent coatings 14, 15 can be the same coating thickness or different coating thicknesses. The oil-repellent coatings 14, 15 may be formed of an appropriate material and thickness depending on the material of the hollow input shaft 5, the material of the ball retainer 47, the type of grease used, and the like.

In the strain wave gearing 1, the externally toothed gear 3, into which the wave generator 4 with an elliptical contour is fitted, is flexed into an elliptical shape at the portion where the external teeth 31 are formed, and the portion of the external teeth 31 located at the major axis position of the ellipse and in the vicinity thereof meshes with the internal teeth 21. The hollow input shaft 5 is connected to an output shaft of a motor or the like (not shown), and the hollow input shaft 5 is rotated at high speed. When the wave plug 42 of the wave generator 4 rotates at high speed integrally with the hollow input shaft 5, the meshing position of the externally toothed gear 3 with respect to the internally toothed gear 2 moves in the circumferential direction. The number of teeth of the internally toothed gear 2 is 2n (n: positive integer) more than the number of teeth of the externally toothed gear 3. A relative rotation according to this difference in the number of teeth occurs between the two gears 2 and 3. The internally toothed gear 2 is the fixed side, and a reduced rotation, which is a significantly reduced input rotation, is taken out from the externally toothed gear 3 via the output end plate 8 to the load side (not shown).

Here, the input-shaft outer circumferential surface portions 53, 56 of the hollow input shaft 5 rotating at high speed and the end surface portions 54, 55 on both sides of the wave plug 42 are covered with the oil-repellent coating 14. In addition, the surface of the ball retainer 47, which rotates together with the balls 46 at a predetermined speed in accordance with the high-speed rotation of the hollow input shaft 5, is also covered with the oil-repellent coating 15. When the hollow input shaft 5 rotates at high speed, the oil-repellent coating 14 makes it easier for the grease to be shaken off by centrifugal force, reducing the amount of grease adhering to the hollow input shaft 5 and reducing the grease stirring resistance. Similarly, in the ball retainer 47 rotating at a predetermined speed, the oil-repellent coating 15 makes it easier for the grease to be shaken off by centrifugal force, reducing the amount of grease adhering to the ball retainer 47. Since the amount of grease adhering is reduced, the grease stirring resistance acting on the hollow input shaft 5 and the ball retainer 47 is reduced.

In addition, the oil-repellent coating 14 causes slippage between the grease and the input-shaft outer circumferential surface portions 53, 56 of the hollow input shaft 5 and the end faces 54, 55 on both sides of the wave plug 42 that come into contact with the grease, lowering the grease shear rate and reducing the grease stirring resistance acting on the hollow input shaft 5. Similarly, the oil-repellent coating 15 causes slippage between the grease and the surface of the ball retainer 47 that comes into contact with the grease, lowering the grease shear rate and reducing the grease agitation resistance acting on the ball retainer 47.

In this way, the oil-repellent coatings 14, 15 can reduce the grease stirring resistance acting on the hollow input shaft 5 and the ball retainer 47, thereby reducing the loss torque of the strain wave gearing 1.

### (Other embodiments)

In the above embodiment, the present invention is applied to a top-hat type strain wave gearing equipped with a top-hat shaped externally toothed gear. The present invention is similarly applicable to other types of strain wave gearings. For example, the present invention is also applicable to a cup type strain wave gearing equipped with a cup shaped externally toothed gear, and also to a flat type strain wave gearing equipped with a drive side internally toothed gear, a stationary side internally toothed gear, and a cylindrical externally toothed gear.

## Claims

1. A strain wave gearing comprising:
a rigid internally toothed gear;
a flexible externally toothed gear arranged coaxially inside the internally toothed gear;
a wave generator provided with a wave plug and a wave bearing mounted between a non-circular outer circumferential surface of the wave plug and an inner circumferential surface of the externally toothed gear;
an input shaft attached coaxially to the wave plug;
an input-shaft outer circumferential surface portion located inside the externally toothed gear in the input shaft; and
a first oil-repellent coating that covers the input-shaft outer circumferential surface portion and has oil-repellent properties against a lubricant applied or supplied to the wave bearing.

2. The strain wave gearing according to claim 1, wherein
the wave bearing comprises:
an inner ring and an outer ring;
a plurality of rolling elements inserted in a rollable state into an annular raceway groove formed between the inner ring and the outer ring;
a retainer that holds the rolling elements at positions spaced at regular intervals in a circumferential direction; and
a second oil-repellent coating that covers a surface of the retainer and has oil-repellent properties against the lubricant.

3. The strain wave gearing according to claim 2, wherein
the first and second oil-repellent coatings are a fluororesin coating.
